# EUROPEAN PATENT APPLICATION

(11) **EP 4 350 895 A2**
(43) Date of publication of application: **10.04.2024**
(21) Application number: 23202217.8
(22) Date of filing: 06.10.2023
(51) Int. Cl.: H01R 13/52

(54) **SEAL FOR AN ELECTRICAL PLUG DEVICE AS WELL AS HOUSING ASSEMBLY, ELECTRICAL PLUG DEVICE AND CASTING TOOL**

(30) Priority: 07.10.2022 DE 102022126006
(71) Applicant: TE Connectivity Germany GmbH, 64625 Bensheim (DE)
(72) Inventor: MECHTERIDIS, Dimitrios, 64625 Bensheim (DE)
(74) Representative: Grünecker Patent- und Rechtsanwälte PartG mbB

(57) **Abstract**

The present invention relates to a seal (1) for an electrical plug device (4) with a through-opening (10) for passing through an electrical conductor (12) of the electrical plug device (4), wherein the through-opening (10) extends along a hole axis (18) and, in the through-opening (10), a sealing protrusion is arranged which extends in a closed manner and at least sectionally obliquely to a normal plane (30) of the hole axis (18) around the hole axis (18). Due to the at least sectional obliqueness of the sealing protrusion (28), a lead-in chamfer (32) is created which facilitates the passing through of the electrical conductor (12) through the through-opening (10). Further, the present invention relates to a housing assembly (2) and an electrical plug device (4) with such a seal (1). Moreover, the present invention relates to a casting tool (6) for manufacturing such a seal (1).

## Description

The present invention relates to a seal for an electrical plug device. Further, the present invention relates to a housing assembly with such a seal and to a casting tool for manufacturing such a seal. In addition, the present invention relates to an electrical plug device with such a housing assembly.

Plug devices are used in numerous fields of technology to create detachable connections for the transmission of electrical currents and/or signals. For reasons of electrical safety and improved handling, plug devices usually have a housing from the interior of which electrical conductors lead out for current and/or signal transmission. In this context, there is often a need to prevent moisture and/or dirt from entering the interior of the housing by means of a seal.

With a conventional seal, installation is associated with a comparatively high effort, because the seal must form a sealing press fit with the electrical conductor and therefore first exerts a certain resistance to the passing through of the electrical conductor. In particular with thin and filigree conductors, passing through is therefore difficult because such conductors are easily bent in the process.

The problem underlying the present invention is therefore to provide technical means for sealing plug devices which can be installed smoothly and without the application of excessive force.

This problem is solved by a seal for an electrical plug device, wherein the seal has a through-opening for passing through an electrical conductor of the electrical plug device, wherein the through-opening extends along a hole axis and a sealing protrusion is arranged in the through-opening, which extends in a closed manner and at least sectionally obliquely to a normal plane of the hole axis around the hole axis.

The electrical conductor can be a contact element as well as a cable or wire of the electrical plug device. The normal plane is a plane perpendicular to the hole axis. In other words, the normal plane is the plane of the normal or perpendicular plane.

The present invention is advantageous because the at least sectionally obliqueness of the sealing protrusion forms a lead-in chamfer that simplifies the passing through of the electrical conductor. In this case, the lead-in chamfer formed by the sealing protrusion is not only directed radially inward, as is the case with conventional seals, but also extends obliquely in the circumferential direction. This results in increased ease of movement when the electrical conductor is passed through the through-opening, and the force to be exerted on the electrical conductor is correspondingly smaller.

The invention can be further improved by the following configurations, each of which is advantageous and can be combined with one another as desired.

According to a first possible configuration that can be easily manufactured, the seal can be a sealing element made of rubber, silicone, for example vinyl methyl silicone (VMS), or another sealing material. Preferably, the sealing protrusion is adapted as a sealing lip or sealing rib projecting radially inward with respect to the hole axis. In particular, the sealing lip or sealing rib can point convexly inward in any radial section with respect to the hole axis and have a vertex that is closest to a center axis of the through-opening. Alternatively, the sealing protrusion can be a sealing diaphragm that at least partially or completely seals the through-opening.

The course of the sealing protrusion mentioned at the beginning can, for example, be defined by a closed center plane separating the sealing protrusion into two equal parts. This center plane can thus be adapted to extend around the hole axis in a closed circumferential manner and, at least sectionally, extend obliquely to the normal plane of the hole axis. All other descriptions of the course of the sealing protrusion also refer to this center plane.

In the case of a sealing protrusion adapted as a sealing lip or sealing rib, the course can also be defined by a connecting line of all vertices. This means that this connecting line can be adapted to extend around the hole axis in a closed circumferential manner and, at least sectionally, extend obliquely to the normal plane of the hole axis. All other descriptions of the course of the sealing protrusion also refer to this connecting line.

An alternative definition of the course of the sealing protrusion can be via a transition of the sealing protrusion into an inner wall of the through-opening. More precisely, a surface and/or base of the sealing protrusion can transition into an inner surface of the through-opening. This transition between the sealing protrusion and the inner wall can be adapted to extend around the hole axis in a closed circumferential manner and, at least sectionally, extend obliquely to the normal plane of the hole axis. All other descriptions of the course of the sealing protrusion thus also refer to this transition.

According to another possible configuration, the sealing protrusion can extend seamlessly. In particular, the sealing protrusion can extend seamlessly around the hole axis. That is, the sealing protrusion can extend continuously, curvilinearly, smoothly, shock-free and/or without crack-free. Furthermore, the course of the sealing protrusion in the direction of the hole axis can have a continuous, monotonous, progressive or regressive gradient, at least sectionally. This means that there are no folds or gaps that could cause leakage.

One section of the sealing protrusion can be offset from another section of the sealing protrusion in the direction of the hole axis. In particular, the sealing protrusion can have a first section and a second section spaced apart from it, wherein the two sections are offset from each other in the direction of the hole axis. In other words, the two offset sections are at different heights with respect to the hole axis. Thus, when the electrical conductor is passed through the through-opening, it can be guided past the two offset sections individually and one after the other. This reduces the maximum effort required or at least distributes it over the length of the through-opening so that it is not applied all at once.

The sealing force must not necessarily decrease as a result of the two offset sections, as long as the electrical conductor is otherwise held stable and a cross-section that is free when viewed in the direction of the hole axis remains unchanged over the entire length of the through-opening.

In order to connect the two offset sections to each other, the sealing protrusion can have two further sections opposite each other with respect to the hole axis, in particular with respect to the center axis of the through-opening. In other words, the sealing protrusion can have a third section and a fourth section spaced apart therefrom, which are opposite to each other. This means that the two opposite sections are at the same height with respect to the hole axis or center axis. Preferably, the two opposing sections are adapted to be mirror symmetrical. The two offset sections and the two opposing sections, i.e. the first, second, third and fourth sections, then form the sealing protrusion.

Alternatively, the sealing protrusion can also have no sections that are symmetrically opposite each other with respect to the center axis of the through-opening. The two offset sections are then connected to each other via asymmetrical sections of the sealing protrusion.

According to another possible configuration, the sealing protrusion can extend along an extension plane, in particular a straight extension plane, which is inclined with respect to the hole axis. This results in a shorter circumferential length compared to a sealing protrusion that does not extend along a straight plane. In this context, the extension plane can be inclined by one or two mutually perpendicular tilting axes. Furthermore, the respective inclination can be up to 45°.

In general, an inner contour of the through-opening can be adapted to an outer contour of the electrical conductor. Thus, for example, the through-opening can be adapted as a square or polygonal through-hole if electrical conductors with a square or polygonal profile are to be passed through.

In order to enable sealing of round contact elements, cables or wires, the through-opening can be adapted as a round circular hole. Furthermore, the sealing protrusion can form a circular, annular or toroidal segment, at least sectionally. In particular, the already mentioned first, second, third and fourth sections of the sealing protrusion can each form a circular, annular or toroidal segment.

For example, the inner diameter of the through-opening can preferably be at most 1 mm, in particular at most 0.8 mm, and in any case more than 0.2 mm. Thus, the seal can be used to seal particularly fine electrical conductors, such as those used in many fields of signal transmission. The inner diameter can also be larger, if necessary. This may be the case, for example, with larger electrical conductors.

For sealing flat ribbon cables or flat contact elements, the through-opening can be adapted as an oval or polygonal oblong hole, the longitudinal direction of which extends perpendicular to the hole axis. Furthermore, the sealing protrusion can form, at least sectionally, a straight segment extending parallel to the longitudinal direction of the oblong hole. In particular, the straight segment can extend parallel or obliquely to the normal plane of the hole axis.

For example, the aforementioned first and second sections of the sealing protrusion can each form a straight segment that is parallel to the normal plane of the hole axis. The third and fourth sections of the sealing protrusion, which have also already been mentioned, can also each form a straight segment which in turn extends obliquely to the normal plane of the hole axis. Preferably, the first and second sections extend along the long sides of the oblong hole and the third and fourth sections extend along the short sides of the oblong hole, or vice versa.

According to another possible configuration, one or more further sealing protrusions can be arranged in the through-opening to increase the sealing capability. The further sealing protrusion or the further sealing protrusions can each be adapted as described above. In particular, all sealing protrusions in the through-opening can be parallel to each other. Alternatively, the respective sealing protrusions can also have different angles of inclination with respect to the hole axis.

In order that the seal can also be used in plug devices with several electrical conductors, the seal optionally has one further through-opening or several further through-openings. The further through-opening or the further through-openings can each be adapted as described above. All through-openings preferably have the same number of sealing protrusions in each case. The sealing protrusions of the respective through-openings can extend parallel to one another or have different angles of inclination with respect to the hole axis.

The problem initially specified is also solved by a housing assembly for an electrical plug device, wherein the housing assembly comprises a seal in accordance with one of the configurations described above and a housing part, wherein the seal is adapted to be accommodated in the housing part.

Due to the functionality and advantages of the seal already explained, the electrical conductor can also be mounted in the housing assembly according to the invention without requiring a high amount of effort during the manufacture of the plug device. Moreover, the housing part additionally facilitates the installation of the electrical conductor, since the seal can be accommodated in the housing part and thus becomes more dimensionally stable.

According to one possible configuration of the housing assembly, the seal and the housing part can be two separate components that are assembled as part of the manufacturing of the plug device. This configuration is characterized by good maintainability if, for example, the seal needs to be replaced due to aging or wear.

In order to enable stable contact of the seal in the housing part, the seal can have at least one flat side, which preferably extends perpendicular to the hole axis. In particular, the seal can be adapted as a mat seal.

Optionally, the seal has at least one radially outward-facing outer sealing lip. The outer sealing lip is particularly advantageous when the seal is accommodated in the housing part, since it both contributes to the tightness of the housing assembly and fixes the seal in the housing part.

Alternatively, the seal and the housing part can form a two-component part. In other words, the housing part can be injection molded as a plastic part and then overmolded with the seal. Thus, the housing assembly counts fewer separate components.

An electrical plug device also solves the problem initially specified if the electrical plug device has a housing assembly according to one of the configurations described above and at least one electrical conductor, wherein the at least one electrical conductor extends through the through-opening of the seal and the sealing protrusion of the seal abuts the at least one electrical conductor in a sealing manner.

The plug device according to the invention also benefits from the advantages of the seal. In particular, the plug device can be assembled with lower effort when passing the electrical conductor through the through-opening.

Finally, the problem initially specified is also solved by a casting tool for manufacturing a seal in accordance with one of the configurations described above, wherein the casting tool has at least one core for creating the through-opening of the seal.

By means of the casting tool according to the invention, a seal can be manufactured which has the functionality and advantages already described.

According to one possible configuration of the casting tool, the at least one core can be adapted to move along a coring direction relative to the rest of the casting tool. In this case, the coring direction preferably extends parallel to the hole axis. Furthermore, the at least one core can have a groove for forming the sealing protrusion, wherein the groove extends around the coring direction and obliquely to the coring direction. The obliqueness of the groove results in a pull-off chamfer on the at least one core, so that the casting tool according to the invention can be cored more easily.

Optionally, one portion of the groove can be offset from another portion of the groove in the coring direction. In particular, the groove can have a first portion and a second portion spaced apart therefrom, wherein the two portions are offset from each other in the coring direction. In other words, the two offset portions are at different heights with respect to the coring direction. Therefore, the distance between the two portions is greater than the free cross-section of the through-opening already mentioned above. The at least one core thus has a greater material thickness between the two portions than if the two portions were at the same height with respect to the coring direction. Consequently, according to this configuration, the casting tool can be used for more casting cycles before the at least one core wears out or breaks off.

In the following, the invention is explained in more detail with reference to the drawings on the basis of several embodiments, the different features of which can be combined as desired in accordance with the above remarks. In the drawings, similar, identical and functionally identical elements are identified by the same reference signs, insofar as this is expedient.

The drawings show:
- Fig. 1: a schematic perspective view of a seal according to a first exemplary embodiment;
- Fig. 2: a schematic perspective sectional view of the seal of Fig. 1;
- Fig. 3: a schematic sectional view of a seal according to a second exemplary embodiment;
- Fig. 4: a schematic perspective sectional view of a seal according to a third exemplary embodiment;
- Fig. 5: a schematic perspective sectional view of a seal according to a fourth exemplary embodiment;
- Fig. 6: a schematic perspective sectional view of a housing assembly according to an exemplary embodiment;
- Fig. 7: a schematic sectional view of an electrical plug device according to an exemplary embodiment;
- Fig. 8: a schematic sectional view of an electrical plug device according to another exemplary embodiment; and
- Fig. 9: a schematic sectional view of a casting tool according to an exemplary embodiment.

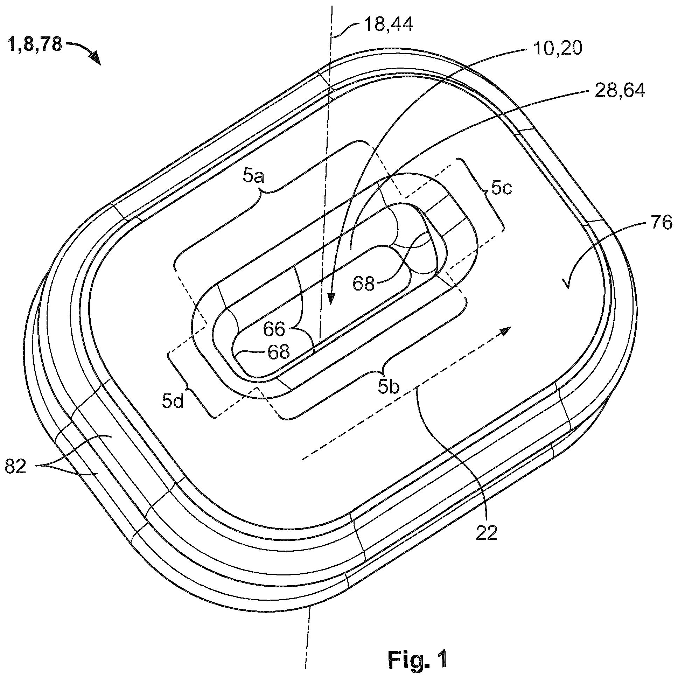

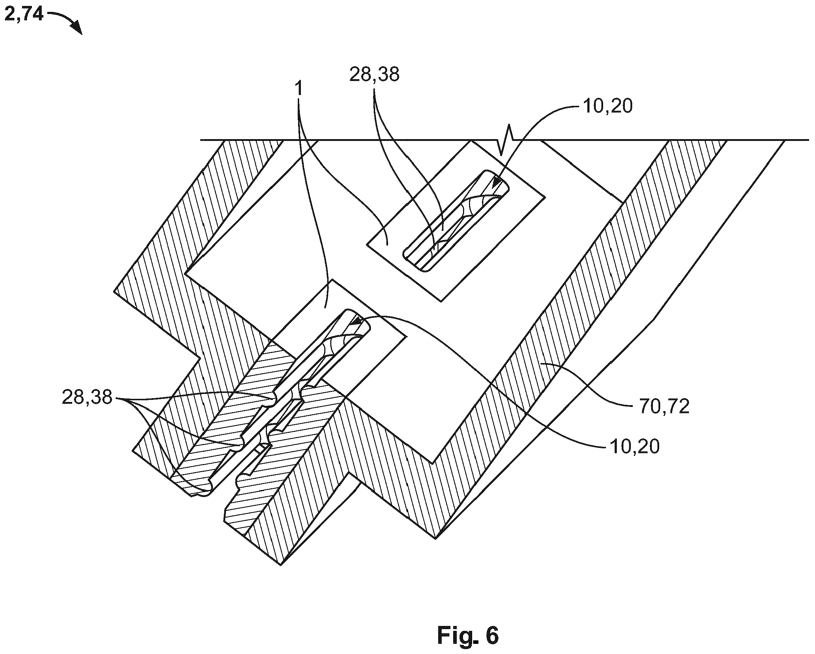

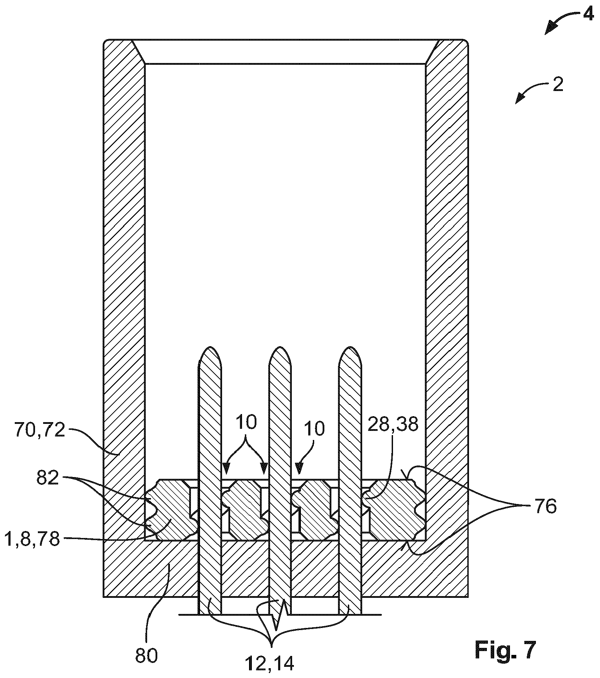

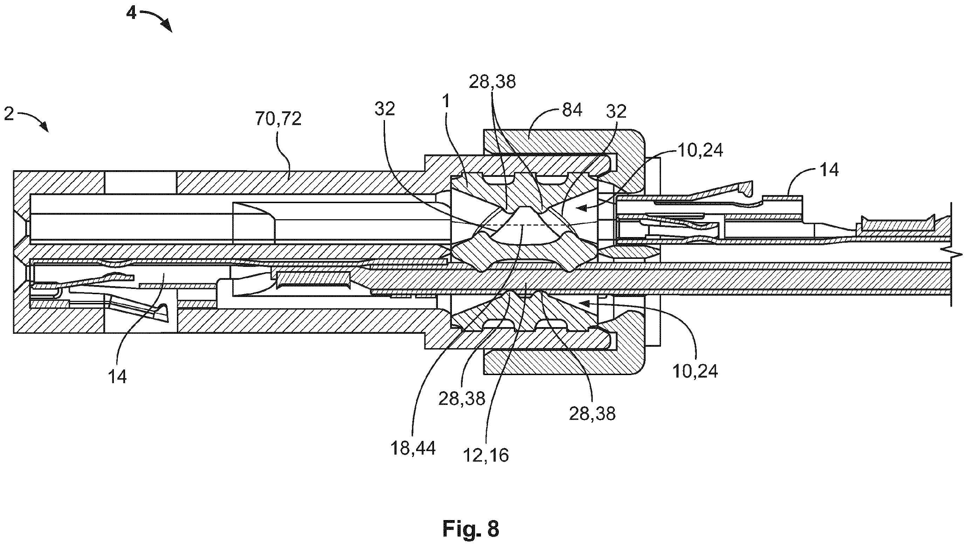

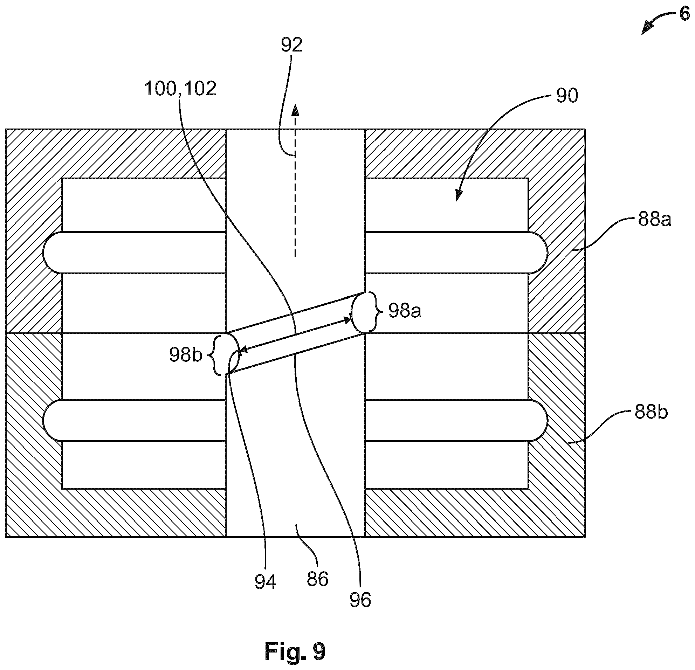

With reference to Figs. 1 to 5, the schematic structure of a seal 1 according to the invention is described below. The schematic structure of a housing assembly 2 according to the invention is described with reference to Fig. 6. The schematic structure of an electrical plug device 4 according to the invention is then described with reference to Figs. 7 and 8. Finally, the schematic structure of a casting tool 6 according to the invention is described with reference to Fig. 9.

Fig. 1 shows an exemplary embodiment of the seal 1 for the electrical plug device 2. The seal 1 here is a sealing element 8 made of rubber, silicone, for example vinyl methyl silicone (VMS), or another sealing material. The seal 1 has a through-opening 10 for passing through an electrical conductor 12 of the electrical plug device 2. The electrical conductor 12 can be either a contact element 14 (see Fig. 7) or a cable 16 (see Fig. 8) of the electrical plug device 4.

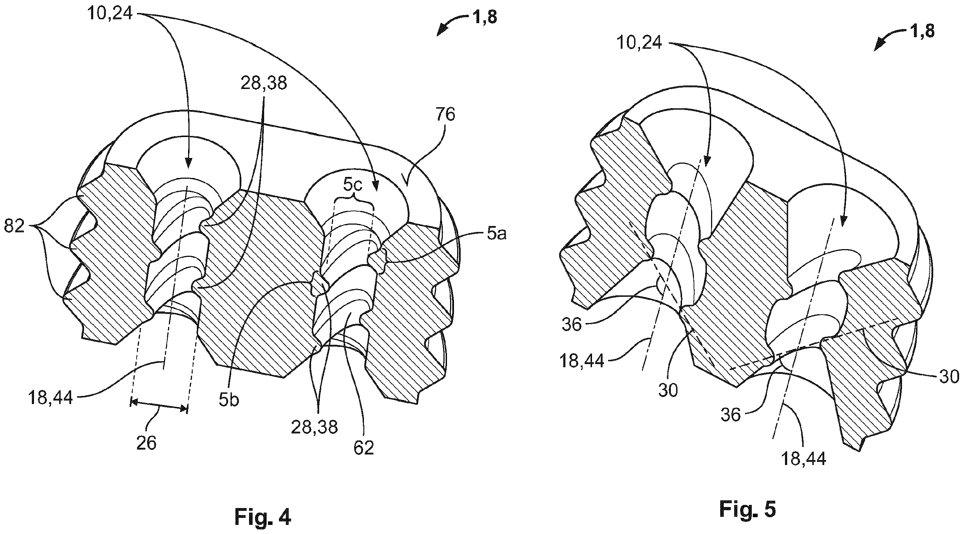

The through-opening 10 extends along a hole axis 18 through the sealing element 8. In the embodiment shown in Fig. 1, the through-opening 10 is adapted as an oval oblong hole 20. The longitudinal direction 22 of the oblong hole 20 extends perpendicular to the hole axis 18. Alternatively, the through-opening 10 can be adapted as a round circular hole 24 (see Figs. 4 and 5). For example, the inner diameter 26 of the circular hole 24 can be at most 1 mm, in particular at most 0.8 mm, and in any case more than 0.2 mm. This can be advantageous for fine electrical conductors 12. If larger electrical conductors 12 are used, the circular hole 24 can be correspondingly larger.

Generally, an inner contour of the through-opening 10 can be adapted to an outer contour of the electrical conductor 12, resulting in a sealing press fit. For example, the through-opening 10 can also be adapted as a square or polygonal through-hole if electrical conductors with a square or polygonal profile are to be passed through.

A sealing protrusion 28 is arranged in the through-opening 10, which is adapted to be closed and circumferential and extends around the hole axis 18 at least sectionally obliquely to a normal plane 30 of the hole axis 18. The normal plane 30 is here the plane perpendicular to the hole axis 18 (i.e. the plane of the normal or perpendicular plane).

The at least sectionally inclined course of the sealing protrusion 28 forms a lead-in chamfer 32, which simplifies the passing through of the electrical conductor 12 through the through-opening 10. Preferably, the sealing protrusion 28 extends seamlessly for this purpose. That is, the sealing protrusion 28 can extend continuously, curvilinearly, smoothly, shock-free or crack-free. Furthermore, the course of the sealing protrusion 28 in the direction of the hole axis 18 can have a continuous, monotonous, progressive or regressive gradient, at least sectionally. In particular, the sealing protrusion 28 can extend along an extension plane 34, in particular a straight extension plane 34, which is inclined with respect to the hole axis 18. The angle of inclination 36 can be up to 45°.

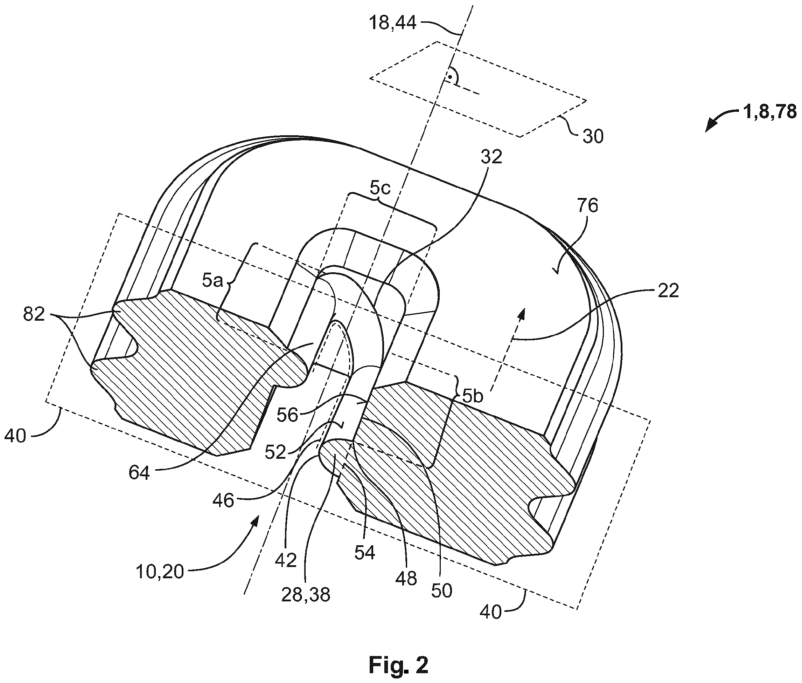

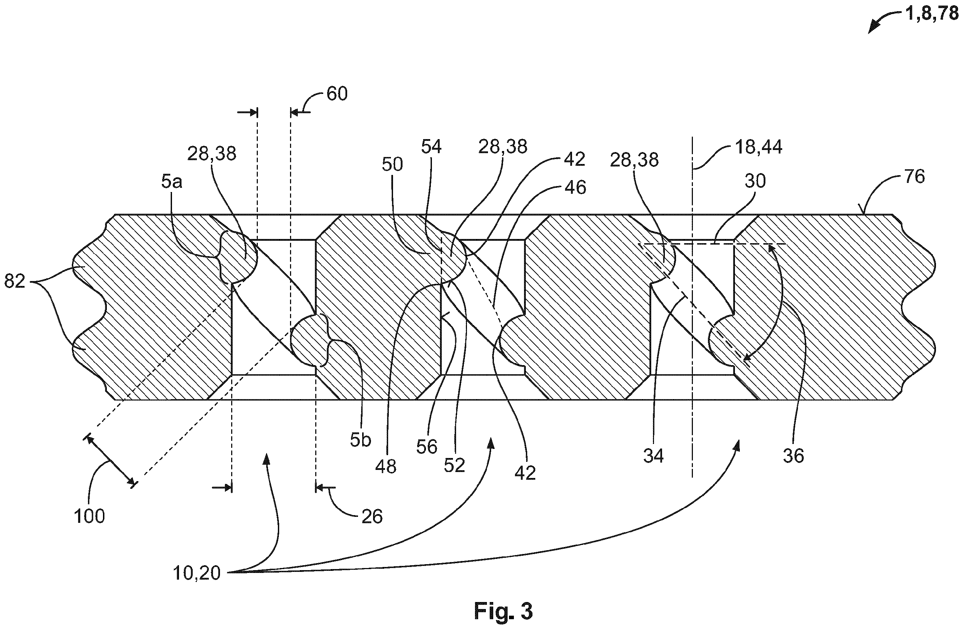

As can be seen from the sectional view of Figs. 2 and 3, the sealing protrusion 28 can be adapted as a sealing lip 38 projecting radially inward with respect to the hole axis 18. In any radial section 40 with respect to the hole axis 18, the sealing lip 38 can point convexly inward and have a vertex 42 that is closest to a center axis 44 of the through-opening 10. According to an alternative embodiment not shown, the sealing protrusion can be a sealing diaphragm that at least partially or completely seals the through-opening.

The course of the sealing protrusion 28 can, for example, be defined by a connecting line 46 of all vertices 42. This means that this connecting line 46 can be adapted to extend circumferentially in a closed manner around the hole axis 18 and, at least sectionally, extend obliquely to the normal plane 30 of the hole axis 18. All other descriptions of the course of the sealing protrusion 28 likewise refer to this connecting line 46.

Alternatively, the course of the sealing protrusion 28 can be defined by a transition 48 of the sealing protrusion 28 into an inner wall 50 of the through-opening 10. More precisely, a surface 52 and/or base 54 of the sealing protrusion 28 can transition into an inner surface 56 of the through-opening 10 (see Fig. 3). This transition 48 between the sealing protrusion 28 and the inner wall 50 can be adapted to extend circumferentially in a closed manner around the hole axis 18 and, at least sectionally, can extend obliquely to the normal plane 30 of the hole axis 18.

A further alternative definition of the course of the sealing protrusion 28 can be provided by a closed center plane (not shown) separating the sealing protrusion 28 into two equal parts. For example, this center plane can be adapted to extend circumferentially around the hole axis in a closed manner and, at least sectionally, extend obliquely to the normal plane of the hole axis.

The sealing protrusion 28 can be formed of first, second, third and fourth sections 5a, 5b, 5c, 5d. The first section 5a of the sealing protrusion 28 is offset from the second section 5b of the sealing protrusion 28 in the direction of the hole axis 18. Further, the first section 5a is spaced apart from the second section 5b in this case. In other words, the two offset sections 5a, 5b are at different heights with respect to the hole axis 18 (see Fig. 3). Thus, when the electrical conductor 12 is passed through the through-opening 10, it can be guided past the two offset sections 5a, 5b individually and one after the other. This reduces the effort required or at least distributes it better over the length of the through-opening 10.

The sealing force must not necessarily decrease as a result of the two offset sections, as long as the electrical conductor 12 is otherwise held stable (see Fig. 7) and, when viewed in the direction of the hole axis 18, a free cross-section 60 remains unchanged along the entire length of the through-opening 10.

The two offset sections 5a, 5b are connected to each other via the third section 5c and the fourth section 5d, spaced apart therefrom, of the sealing protrusion 28. In this case, the third section 5c and the fourth section 5d are opposite each other with respect to the hole axis 18, in particular with respect to the center axis 44 of the through-opening 10 (see Fig. 1). This means that the two opposing sections 5c, 5d are at the same height with respect to the hole axis 18 and center axis 44, respectively. In addition, the two opposing sections 5c, 5d can be adapted to be mirror-symmetrical.

As shown in Figs. 4 and 5, the first, second, third and fourth sections 5a, 5b, 5c, 5d of the sealing protrusion 28 can each form a toroidal segment 62 when they are arranged in the through-opening 10 adapted as a circular hole 24.

In the through-opening 10 adapted as an oblong hole 20, the first and second sections 5a, 5b of the sealing protrusion 28 can each form a straight segment 64 extending parallel to the normal plane 30 of the hole axis 18. The third and fourth sections 5c, 5d of the sealing protrusion 28 can in turn each form a straight segment 64 which extends obliquely to the normal plane 30 of the hole axis 18. Preferably, the first and second sections 5a, 5b extend along the long sides 66 of the oblong hole 20 and the third and fourth sections 5c, 5d extend along the short sides 68 of the oblong hole 20 or vice versa.

As can be seen, for example, from Fig. 6, a plurality of further sealing protrusions 28 can be arranged in the through-opening 10 to increase the sealing capability. The further sealing protrusions 28 can each be adapted as described above. In particular, all sealing protrusions 28 in the through-opening 10 can extend parallel to each other. Alternatively, the respective sealing protrusions can also have different angles of inclination 36 with respect to the hole axis 18 (see Fig. 8).

Depending on how many electrical conductors 12 are used in the electrical plug device 4, the seal 1 can have a corresponding number of through-openings 10. In other words, the seal 1 can have several further through-openings 10 (see Fig. 3). The further through-openings 10 can each be adapted as described above. In this case, the through-openings 10 each preferably have the same number of sealing protrusions 28. The sealing protrusions 28 of the respective through-openings 10 can extend parallel to one another (see Fig. 4) or have different angles of inclination 36 with respect to the hole axis 18 (see Fig. 5).

Fig. 6 shows an exemplary embodiment of the housing assembly 2 for the electrical plug device 2. The housing assembly 2 has a seal 1 according to one of the configurations described above and a housing part 70, wherein the seal 1 is accommodated in the housing part 70. Furthermore, the housing assembly 2 has a further seal 1 which is also accommodated in the housing part 70. In this case, the housing part 70 is manufactured as a plastic injection-molded part 72 and is subsequently overmolded with the seals 1. The seals 1 and the housing part 70 thus form a two-component part 74.

Fig. 7 shows an alternative embodiment of the housing assembly 2 in which the seal 1 and the housing part 70 are separate components that can be assembled. In order to enable stable contact of the seal 1 in the housing part 70 in this case, the seal 1 can have at least one flat side 76, which preferably extends perpendicular to the hole axis 18. In particular, the seal 1 can be adapted as a mat seal 78, which is placed in abutment on a bottom 80 of the housing part 70.

Optionally, the seal 1 has at least one, preferably a plurality of radially outwardly pointing outer sealing lips 82. The outer sealing lips 82 contribute to the tightness of the housing assembly 2 and fix the seal 1 in the housing part 70 when it is accommodated there (see Fig. 7).

Alternatively or in addition to the outer sealing lips 82, the seal 1 can also be held by a housing cap 84 of the housing assembly 2, wherein the housing cap 84 is attachable to the housing part 70 (see Fig. 8).

Fig. 7 further shows an exemplary embodiment of the electrical plug device 4 with the housing assembly 2 and a plurality of electrical conductors 12. As can be seen, the electrical conductors 12 extend through the through-openings 10 of the seal 1. The respective sealing protrusion 28 of the through-openings 10 is in sealing abutment with the associated electrical conductor 12. Furthermore, the electrical conductors 12 are each adapted as contact elements 14 which are held by the housing part 70.

Fig. 8 shows another exemplary embodiment of the electrical plug device 4. Here, the sealing protrusions 28 of the seal 1 do not abut against contact elements 14, but against an electrical cable 16 of the plug device 4, to the end of which the contact element 14 is attached (e.g. by crimping, soldering, welding or the like). In order to achieve this state, the contact element 14 must be passed through the respective through-opening 10. This installation step is facilitated by the already mentioned lead-in chamfer 32 on the sealing protrusions 28.

Fig. 9 shows an exemplary embodiment of the casting tool 6 for manufacturing the seal 1 in a partial sectional view. The casting tool 6 has at least one core 86 for creating the through-opening 10 of the seal 1. Furthermore, the casting tool 6 comprises two separable casting mold halves 88a, 88b, which together with the at least one core 86 form a cavity 90 with which the seal 1 can be casted. The at least one core 86 is adapted to move relative to the two mold halves 88a, 88b along a coring direction 92, wherein the coring direction 92 preferably extends parallel to the hole axis 18.

Furthermore, the at least one core 86 can include a groove 94 for forming the sealing protrusion 28. The groove 94 extends in a closed manner, around the coring direction 92 and, at least sectionally, obliquely with respect to the coring direction 92. The obliqueness of the groove 94 results in a pull-off chamfer 96 on the at least one core 86, so that the casting tool 6 according to the invention can be cored more easily.

Optionally, a first portion 98a of the groove 94 can be offset from a second portion 98b of the groove 94 in the coring direction 92. In other words, the two offset portions 98a, 98b are at different heights with respect to the coring direction 92. Therefore, the distance 100 between the two offset portions 98a, 98b is greater than the free cross-section 60 of the through-opening 10 mentioned earlier. The at least one core 86 thus has a greater material thickness 102 between the two offset portions 98a, 98b than if all portions of the groove were at the same height with respect to the coring direction 92. Consequently, according to this embodiment, the casting tool 6 can be used for more casting cycles before the at least one core 86 wears out or breaks off.

Of course, the casting tool 6 can also have several cores 86 if the seal 1 to be manufactured is supposed to have several through-openings. The number of grooves 94 of the core 86/cores 86 depends on the number of sealing protrusions 28 to be provided in the respective through-opening 10.

### List of Reference Signs

- 1: seal
- 2: housing assembly
- 4: plug device
- 5a, 5b, 5c, 5d: section
- 6: casting tool
- 8: sealing element
- 10: through-opening
- 12: conductor
- 14: contact element
- 16: cable
- 18: hole axis
- 20: oblong hole
- 22: longitudinal direction
- 24: circular hole
- 26: inner diameter
- 28: sealing protrusion
- 30: normal plane
- 32: lead-in chamfer
- 34: extension plane
- 36: angle of inclination
- 38: sealing lip
- 40: radial section
- 42: vertex
- 44: center axis
- 46: connecting line
- 48: transition
- 50: inner wall
- 52: surface
- 54: base
- 56: inner surface
- 60: cross-section
- 62: toroidal segment
- 64: segment
- 66: side
- 68: side
- 70: housing part
- 72: plastic injection-molded part
- 74: two-component part
- 76: flat side
- 78: mat seal
- 80: bottom
- 82: outer sealing lip
- 84: housing cap
- 86: core
- 88a, 88b: casting mold half
- 90: cavity
- 92: coring direction
- 94: groove
- 96: pull-off chamfer
- 98a, 98b: portion
- 100: distance
- 102: material thickness

## Claims

1. Seal (1) for an electrical plug device (4) with a through-opening (10) for passing through an electrical conductor (12) of the electrical plug device (4), wherein the through-opening (10) extends along a hole axis (18) and in the through-opening (10), a sealing protrusion (28) is arranged which extends in a closed manner and at least sectionally obliquely to a normal plane (30) of the hole axis (18) around the hole axis (18).

2. Seal (1) according to claim 1, wherein the sealing protrusion (28) extends seamlessly around the hole axis.

3. Seal (1) according to claim 1 or 2, wherein a section (5a) of the sealing protrusion (28) is offset in the direction of the hole axis (18) from another section (5b) of the sealing protrusion (28).

4. Seal (1) according to one of claims 1 to 3, wherein the sealing protrusion (28) extends along an extension plane (34) which is inclined with respect to the hole axis (18).

5. Seal (1) according to one of claims 1 to 4, wherein the through-opening (10) is adapted as a round circular hole (24) and the sealing protrusion (28) forms, at least sectionally, a circular segment, annular segment or toroidal segment (62).

6. Seal (1) according to one of claims 1 to 4, wherein the through-opening (10) is adapted as an oval oblong hole (20), the longitudinal direction (22) of which extends perpendicular to the hole axis (18), and wherein the sealing protrusion (28) forms, at least sectionally, a straight segment (64) extending parallel to the longitudinal direction (22) of the oblong hole (20).

7. Seal (1) according to claim 6, wherein the straight segment (64) extends parallel to the normal plane (30) of the hole axis (18).

8. Seal (1) according to one of claims 1 to 7, wherein the sealing protrusion (28) has two sections (5c, 5d) opposite each other with respect to the hole axis (18).

9. Seal (1) according to one of claims 1 to 8, wherein a further sealing protrusion (28) is arranged in the through-opening (10) and the sealing protrusions (28) extend parallel to one another.

10. Seal (1) according to one of claims 1 to 9, wherein the seal (1) has a further through-opening (10) with a further sealing protrusion (28) and wherein the sealing protrusions (28) of the respective through-openings (10) extend parallel to one another.

11. Seal (1) according to one of claims 1 to 10, wherein the seal (1) is adapted as a mat seal (78).

12. Housing assembly (2) for an electrical plug device (4) comprising a seal (1) according to one of claims 1 to 11 and a housing part (70), wherein the seal (1) is adapted to be accommodated in the housing part (70).

13. Housing assembly (2) according to claim 12, wherein the seal (1) and the housing part (70) are two separate components or form a two-component part (74).

14. Electrical plug device (4) with a housing assembly (2) according to claim 12 or 13 and at least one electrical conductor (12), wherein the at least one electrical conductor (12) extends through the through-opening (10) of the seal (1) and the sealing protrusion (28) abuts the at least one electrical conductor (12) in a sealing manner.

15. Casting tool (6) for manufacturing a seal (1) according to one of claims 1 to 11, wherein the casting tool (6) comprises at least one core (86) for creating the through-opening (10) of the seal (1).
